# DEMANDE DE BREVET EUROPEEN

(11) **EP 4 613 516 A1**
(43) Date de publication de la demande: **10.09.2025**
(21) Numéro de dépôt: 25159873.6
(22) Date de dépôt: 25.02.2025
(51) Int. Cl.: B60H 1/00

(54) **BARRE DE LIAISON POUR LE MAINTIEN D'UN MODULE DE CHAUFFAGE ET/OU DE CLIMATISATION DANS UN COMPARTIMENT DE VÉHICULE AUTOMOBILE**

(30) Priorité: 26.02.2024 FR 2401868
(71) Demandeur: FLEXIS, 92100 Boulogne-Billancourt (FR)
(72) Inventeur: MOISAN, Pascal, 78640 VILLIERS SAINT-FREDERIC (FR)
(74) Mandataire: Lavoix

(57) **Abrégé**

Barre de liaison pour le maintien d'un module de chauffage et/ou de climatisation dans un compartiment de véhicule automobile Barre de liaison (12) pour le maintien d'un module (14) de chauffage et/ou de climatisation agencé à l'intérieur d'un compartiment d'un véhicule automobile (10), notamment un véhicule (10) hybride ou électrique, la barre de liaison (12) étant destinée à être montée transversalement à l'intérieur dudit compartiment de manière à entourer au moins partiellement ledit module (14) de chauffage et/ou de climatisation, la barre de liaison (12) comprenant au moins un tube métallique courbé de sorte à présenter des portions distinctes inclinées les unes par rapport aux autres, dont une portion centrale (16) et deux portions extrémales (18) qui forment des extrémités de la barre de liaison (12), les portions extrémales (18) comportant chacune une plaque de fixation (20) configurée pour accueillir au moins un élément de fixation destiné à fixer la barre de liaison (12) à son environnement; ladite barre de liaison (12) étant caractérisée en ce qu'elle comporte au moins une patte de fixation (24) configurée pour être fixée au module (14) de chauffage et/ou de climatisation afin de maintenir ledit module (14).

## Description

L'invention concerne une barre de liaison pour le maintien d'un module de chauffage et/ou de climatisation agencé à l'intérieur d'un compartiment d'un véhicule automobile, notamment d'un véhicule hybride ou électrique. L'invention concerne également un procédé de fabrication d'une telle barre de liaison. L'invention concerne par ailleurs un véhicule automobile équipé d'une telle barre de liaison ou équipé d'un tel agencement.

Depuis quelques temps, le développement de véhicules automobiles à moteurs électriques ou hybrides apporte de nouveaux défis à relever en termes d'équipements à intégrer dans ces véhicules et en termes d'agencement desdits équipements à l'intérieur des compartiments moteurs de ces véhicules.

D'une manière générale, un tel véhicule automobile électrique ou hybride comprend un module de chauffage et/ou de climatisation très performant, mais ce module est généralement très lourd et assez encombrant. Afin de d'offrir un maximum de place au conducteur, le module de chauffage et/ou de climatisation peut être avancé dans l'espace du compartiment moteur. Cependant, cet agencement présente un inconvénient majeur : la masse du module de chauffage et/ou de climatisation est alors en porte à faux, or cette masse est généralement jugée trop importante pour être autoportée par le tablier séparant l'habitacle du véhicule automobile considéré du compartiment moteur. Sans soutien adéquat, la masse en porte à faux du module de chauffage et/ou de climatisation peut causer des remontées de vibration dans le tablier du véhicule et/ou être à l'origine de fissure dans le tablier du véhicule.

Le but de l'invention est de remédier aux inconvénients décrits ci-dessus en proposant une solution qui permet de créer au moins un point d'ancrage supplémentaire pour maintenir le module de chauffage et/ou de climatisation dans le compartiment de véhicule automobile.

A cet effet, l'invention porte sur une barre de liaison pour le maintien d'un module de chauffage et/ou de climatisation agencé à l'intérieur d'un compartiment d'un véhicule automobile, notamment un véhicule hybride ou électrique, la barre de liaison étant destinée à être montée transversalement à l'intérieur dudit compartiment de manière à entourer au moins partiellement ledit module de chauffage et/ou de climatisation, la barre de liaison comprenant au moins un tube métallique courbé de sorte à présenter des portions distinctes inclinées les unes par rapport aux autres, dont une portion centrale et deux portions extrémales qui forment des extrémités de la barre de liaison, les portions extrémales comportant chacune une plaque de fixation configurée pour accueillir au moins un élément de fixation destiné à fixer la barre de liaison à son environnement, ladite barre de liaison étant caractérisée en ce qu'elle comporte au moins une patte de fixation configurée pour être fixée au module de chauffage et/ou de climatisation afin de maintenir ledit module.

Selon un mode de réalisation, la au moins une patte de fixation comprend une surface plane.

Selon un mode de réalisation, les bords de ladite surface plane de la patte de fixation sont courbés de sorte à conférer à la patte de fixation une section en forme de « U ».

Selon un mode de réalisation, la au moins une patte de fixation présente une forme en crochet.

Selon un mode de réalisation, la barre de liaison comporte plusieurs pattes de fixation, notamment quatre pattes de fixation agencées sur la portion centrale de la barre de liaison.

Selon un mode de réalisation, la barre de liaison comporte au moins un bras additionnel de support et l'extrémité libre dudit bras additionnel présente une lame de fixation configurée pour accueillir au moins un élément de fixation destiné à fixer la barre de liaison à son environnement.

Selon un mode de réalisation, la barre de liaison présente une structure asymétrique.

Selon un mode de réalisation, le au moins un tube métallique courbé présente une section circulaire ayant un diamètre compris entre 25 mm et 50 mm, et plus particulièrement un diamètre égal à 30 mm.

Selon un mode de réalisation, l'épaisseur du au moins un tube métallique courbé est comprise entre 2.5 mm et 5 mm, et plus particulièrement égale à 3 mm.

L'invention porte également sur un procédé de fabrication d'une barre de liaison tel que décrite précédemment, caractérisé en ce que ladite barre de liaison est obtenue au cours d'un procédé de cintrage à froid.

L'invention porte également sur un agencement d'un module de chauffage et/ou de climatisation à l'intérieur d'un compartiment d'un véhicule automobile, l'agencement étant caractérisé en ce qu'il comprend une barre de liaison telle que décrite précédemment ou une barre de liaison obtenue selon le procédé de fabrication décrit précédemment, ladite barre de liaison étant disposée transversalement à l'intérieur dudit compartiment de sorte à entourer au moins partiellement le module de chauffage et/ou de climatisation et caractérisé en ce que la au moins une patte de fixation de ladite barre de liaison est fixée audit module de sorte à porter une partie du poids du module, voire l'ensemble du poids du module de chauffage et/ou de climatisation et en ce que les plaques de fixation des extrémités libres des deux portions extrémales de la barre de liaison sont fixées à des parties latérales d'une caisse du véhicule automobile.

L'invention porte également sur un véhicule notamment un véhicule hybride ou électrique, le véhicule comprenant :
- un habitacle ;
- un compartiment moteur situé longitudinalement à l'avant de l'habitacle ;
- un tablier transversal séparant l'habitacle et le compartiment moteur l'un de l'autre ;
- un module de chauffage et/ou de climatisation agencé à l'intérieur du compartiment moteur ;
- une barre de liaison ayant les caractéristiques ci-dessus, la portion centrale étant agencée longitudinalement en avant du module de chauffage et/ou de climatisation, l'au moins une patte de fixation étant fixée à une partie supérieure du module de chauffage et/ou de climatisation de sorte à porter une partie du poids du module, voire l'ensemble du poids du module de chauffage et/ou de climatisation, les plaques de fixation des extrémités libres des deux portions extrémales de la barre de liaison étant fixées à des parties latérales d'une caisse du véhicule automobile ;
une partie arrière du module de chauffage et/ou de climatisation étant en appui contre le tablier transversal.

Le véhicule peut en outre présenter une ou plusieurs des caractéristiques ci-dessous, considérées individuellement ou selon toutes les combinaisons techniquement possibles :
- la partie centrale de la barre de liaison est située plus haut que le module de chauffage et/ou de climatisation ;
- les parties latérales de la caisse du véhicule automobile sur lesquelles sont fixées les plaques de fixation des extrémités libres des deux portions extrémales de la barre de liaison sont les coupelles amortisseurs ;
- la barre de liaison comporte au moins un autre bras additionnel de support, l'extrémité libre dudit autre bras additionnel présente une autre lame de fixation configurée pour accueillir au moins un élément de fixation destiné à fixer la barre de liaison à un renfort de coupelle amortisseur ;
- le module de chauffage et/ou de climatisation s'étend longitudinalement à partir du tablier transversal au-delà des coupelles amortisseurs, et est supporté seulement par la barre de liaison et le tablier ;
- le module de chauffage et/ou de climatisation présente une forme générale en U, avec une partie centrale transversale située longitudinalement au-delà des coupelles amortisseurs et supportée seulement par la barre de liaison, et deux partie latérales s'étendant vers l'arrière à partir de la partie centrale et fixées au tablier transversal.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 illustre de façon schématique une vue en perspective d'un agencement d'un module de chauffage et/ou de climatisation à l'intérieur d'un compartiment d'un véhicule automobile qui comprend une barre de liaison.
La figure 2 illustre de façon schématique un premier mode de réalisation de la barre de liaison de la figure 1.
La figure 3 illustre de façon schématique la barre de liaison de la figure 2 selon une autre perspective.
La figure 4 illustre la barre de liaison des figures 2 et 3 selon une autre perspective.
La figure 5 illustre la barre de liaison des figures 2 à 4 selon une autre perspective.
La figure 6 est une vue similaire à celle de la figure 1, illustrant un autre mode de réalisation de l'invention.

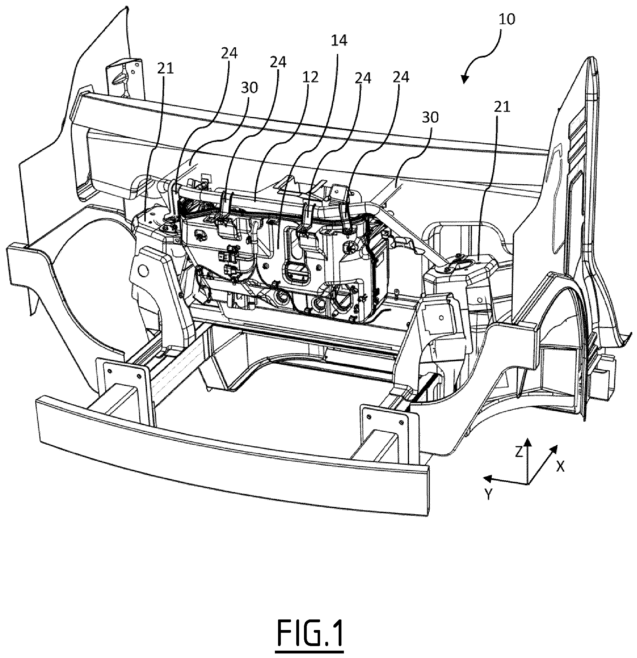

Un trièdre avec trois axes X, Y, Z est illustré sur la figure 1. Dans ce document, l'axe X désigne l'axe longitudinal du véhicule automobile 10. En marche avant et en ligne droite, le véhicule 10 progresse de l'arrière vers l'avant, selon une direction parallèle à son axe longitudinal. L'axe X est orienté de l'avant vers l'arrière du véhicule 10, c'est-à-dire dans le sens de la marche arrière. L'axe Y désigne l'axe transversal du véhicule 10. L'axe Y est orienté de la gauche vers la droite, la gauche et la droite étant définies selon le point de vue d'un conducteur du véhicule 10. L'axe Z désigne l'axe perpendiculaire à l'axe X et à l'axe Y. On considère que le véhicule 10 repose sur un sol horizontal. L'axe Z est un axe vertical, orienté de bas en haut. Les axes X, Y et Z forment un repère orthogonal. Ce même repère, défini par référence à un véhicule 10, sera aussi utilisé pour décrire la barre de liaison 12 et le module 14 de chauffage et/ou de climatisation, même considérés hors du véhicule 10, puisque ces éléments sont destinés à un montage selon une orientation spécifique dans le véhicule 10.

La figure 1 illustre partiellement le véhicule 10. Le véhicule 10 comprend :
- un habitacle H ;
- un compartiment moteur C situé longitudinalement à l'avant de l'habitacle H ;
- un tablier transversal T séparant l'habitacle H et le compartiment moteur C l'un de l'autre.

Sur la figure 1 est illustrée un exemple d'un agencement d'un module 14 de chauffage et/ou de climatisation à l'intérieur d'un compartiment d'un véhicule automobile 10 qui comprend une barre de liaison 12 selon l'invention. Dans cet agencement, la barre de liaison 12 est montée transversalement à l'intérieur dudit compartiment de manière à entourer au moins partiellement ledit module 14 de chauffage et/ou de climatisation.

Le compartiment est le compartiment moteur C.

La barre de liaison 12 est distincte de la traverse de planche de bord. Elle n'est pas intégrée dans la planche de bord.

La barre de liaison 12 comprend au moins un tube métallique courbé de sorte à présenter des portions distinctes inclinées les unes par rapport aux autres. Parmi ces portions distinctes, l'on peut distinguer au moins une portion centrale 16 et deux portions extrémales 18 qui forment des extrémités de la barre de liaison 12. Le tube métallique est par exemple en acier, mais d'autre types de métaux peuvent être envisagés pour cette barre de liaison 12.

Dans l'agencement illustré sur la figure 1, la portion centrale 16 du au moins un tube métallique de la barre de liaison 12 est agencée en avant du module 14 de chauffage et/ou de climatisation tandis que les deux portions extrémales 18 qui forment des extrémités de la barre de liaison 12 se situent sur les côtés dudit module 14. Autrement dit, la portion centrale 16 du au moins un tube métallique de la barre de liaison 12 s'étend parallèlement à l'axe Y transversal, comme illustré sur la figure 1.

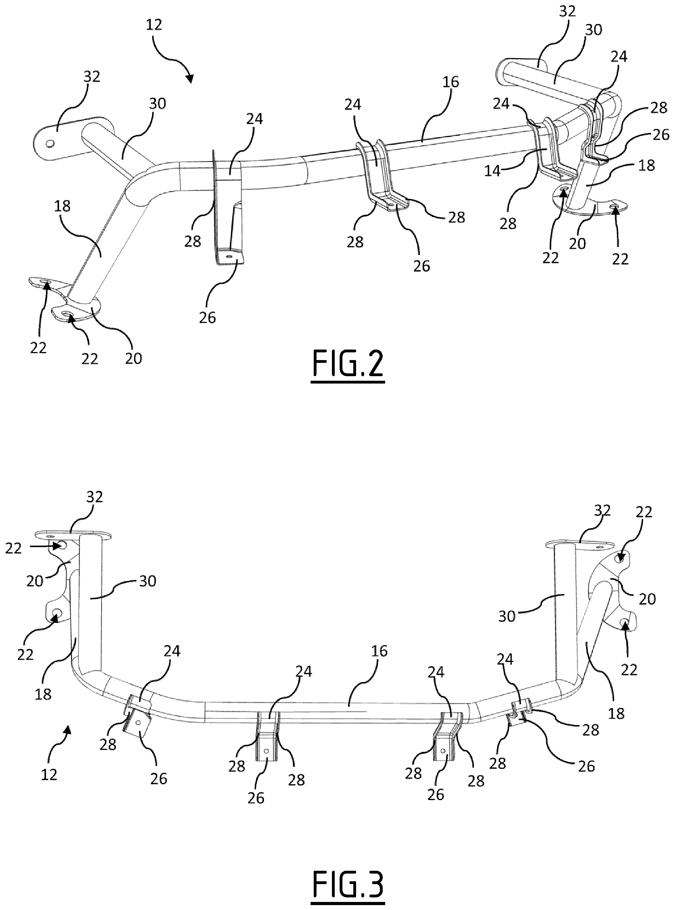

Selon un mode de réalisation préférentiel de la barre de liaison 12 illustré sur les figures 2 à 5, les extrémités libres des deux portions extrémales 18 qui forment des extrémités de la barre de liaison 12 comportent chacune une plaque de fixation 20 configurée pour accueillir au moins un élément de fixation destiné à fixer la barre de liaison 12 à son environnement. Dans le mode de réalisation illustré sur l'ensemble des figures 1 à 5, les plaques de fixation 20 présentent une forme en arc de cercle. Par ailleurs, chacune de ces plaques de fixation 20 est percée de deux trous 22 pour y accueillir au moins un élément de fixation, tel qu'une vis, afin de fixer la barre de liaison 12 à son environnement.

D'une manière générale, les plaques de fixation 20 des extrémités libres des deux portions extrémales 18 de la barre de liaison 12 sont fixées à des parties latérales d'une caisse du véhicule automobile 10. Dans l'agencement illustré sur la figure 1, les plaques de fixation 20 des extrémités libres des deux portions extrémales 18 de la barre de liaison 12 sont plus particulièrement fixées sur des coupelles amortisseurs 21 agencées sur les parties latérales de la caisse du véhicule automobile 10. Dans cet agencement, la barre de liaison 12 est ainsi reliée aux parties latérales de la caisse du véhicule automobile 10 par l'intermédiaire de quatre points de fixation distribués sur deux coupelles amortisseurs 21.

Selon un mode de réalisation préférentiel de la barre de liaison 12, le au moins un tube métallique courbé peut présenter une section circulaire ayant un diamètre compris entre 25 mm et 50 mm. Selon un mode de réalisation particulier, le diamètre du au moins un tube métallique courbé peut présenter un diamètre égal à 30 mm, de sorte à offrir une rigidité optimale.

Selon un mode de réalisation préférentiel de la barre de liaison 12, le au moins un tube métallique courbé est creux et son épaisseur est comprise entre 2.5 mm et 5 mm. Selon un mode de réalisation particulier, l'épaisseur du au moins un tube métallique courbé est plus particulièrement égale à 3 mm, de sorte à offrir un bon compromis entre la rigidité de la barre de liaison 12 et son poids.

D'une manière commune à tous les modes de réalisation, la barre de liaison 12 comporte au moins une patte de fixation 24 configurée pour être fixée au module 14 de chauffage et/ou de climatisation afin de maintenir ledit module 14. Plus particulièrement, la au moins une patte de fixation 24 fixée au module 14 permet de porter une partie du poids du module 14, voire l'ensemble du poids dudit module : la au moins une patte de fixation 24 permet ainsi de rajouter un point d'ancrage pour le maintien du module 14 dans un compartiment d'un véhicule automobile 10.

Selon un mode de réalisation préférentiel, la barre de liaison 12 comporte plusieurs pattes de fixation 24. Dans le mode de réalisation illustré sur les figures 1 à 5, la barre de liaison 12 comporte notamment quatre pattes de fixation 24 agencées sur la portion centrale 16 de la barre de liaison 12. Tel qu'illustré sur la figure 1, les quatre pattes de fixation 24 de la barre de liaison 12 sont fixées sur une face supérieure du module 14.

Dans ce mode de réalisation préférentiel, les quatre pattes de fixation 24 sont agencées d'un même côté de la portion centrale 16 de la barre de liaison 12, cependant, il est tout à fait possible d'imaginer un mode de réalisation de la barre de liaison 12 pour lequel certaines pattes de fixation 24 sont agencées d'un côté de la portion centrale 16 de la barre de liaison 12 et d'autres pattes de de fixation 24 sont agencées de l'autre côté de cette même portion centrale 16 de la barre de liaison 12. **Il** est également possible d'imaginer un mode de réalisation de la barre de liaison 12 pour lequel au moins une patte de fixation 24 est fixée sur l'une des portions extrémales 18 de la barre de liaison 12.

Dans le cas où la barre de liaison 12 comporte plusieurs pattes de fixation 24, les pattes de fixation 24 peuvent présenter des formes et des dimensions différentes les unes des autres. Plus particulièrement, la largeur, la longueur, l'épaisseur et/ou la forme des pattes de fixation 24 peuvent varier d'une patte de fixation 24 à l'autre pour une même barre de liaison 12.

Selon un mode de réalisation préférentiel illustré sur les figures 2 à 5, la au moins une patte de fixation 24 comporte une surface plane 26. Cette surface plane 26 permet de créer une surface d'appui supplémentaire pour maintenir le module 14 de chauffage et/ou de climatisation à l'intérieur du compartiment moteur. La surface plane 26 peut être percée pour y accueillir un élément de fixation tel qu'une vis pour fixer la au moins une patte de fixation 24 au module 14 de chauffage et/ou de climatisation à l'intérieur du compartiment moteur.

Dans le mode de réalisation illustré sur les figures 2 à 5, les bords 28 de ladite surface plane 26 de la patte de fixation 24 sont courbés de sorte à conférer à la patte de fixation 24 une section en forme de « U ». Les bords 28 courbés permettent de rigidifier la patte de fixation 24. Par ailleurs, les bords 28 courbés peuvent servir de support et/ou de rail de guidage pour permettre d'y fixer d'autres composants du compartiment moteur, tels que des câbles et/ou des tuyaux. De cette façon, la ou les pattes de fixation 24 permettent non seulement de créer une surface d'appui supplémentaire pour le module 14 de chauffage et/ou de climatisation, mais également de créer une surface d'appui pour d'autres composants du compartiment moteur. La fonction de la au moins une patte de fixation 24 peut ainsi être diversifiée.

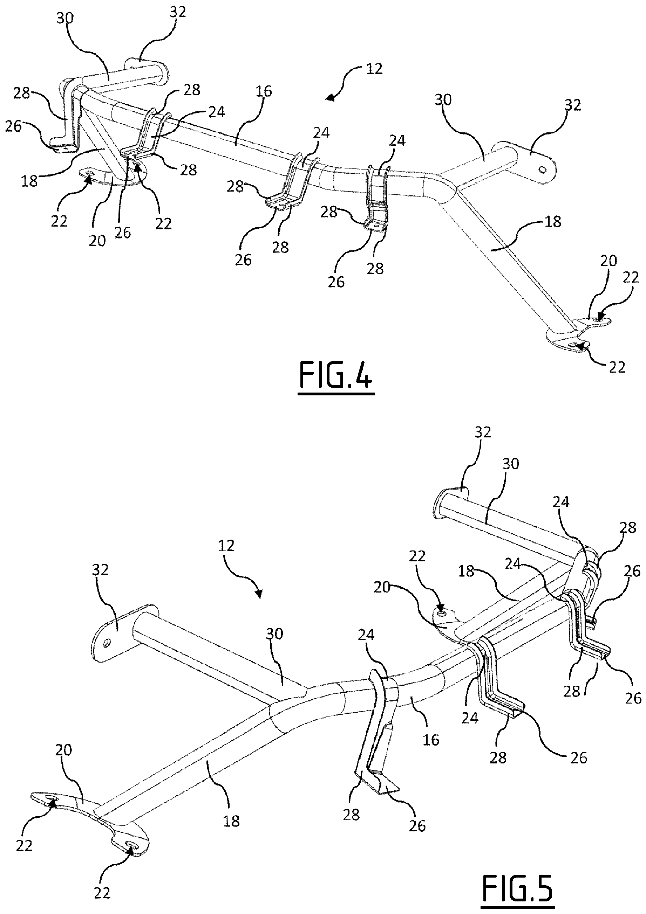

Afin de s'adapter le mieux possible à son environnement, notamment en termes de place disponible, la au moins une patte de fixation 24 peut présenter une forme en crochet. Ceci est plus particulièrement illustré sur la figure 2, sur la figure 4 et sur la figure 5. D'une manière générale, c'est la géométrie du module 14 de chauffage et/ou de climatisation et l'environnement dans lequel sont agencés ledit module 14 et la barre de liaison 12 qui dicte la géométrie de cette barre de liaison 12. Ainsi, la longueur, la largeur, l'épaisseur, la forme générale de la au moins une patte de fixation 24, ainsi que sa position sur la barre de liaison 12 dépendent fortement de la géométrie du module 14 et de l'environnement dans lequel sont agencés ledit module 14 et la barre de liaison 12.

Puisque c'est la géométrie du module 14 de chauffage et/ou de climatisation et l'environnement dans lequel sont agencés ledit module 14 et la barre de liaison 12 qui dictent la géométrie de cette barre de liaison 12, la barre de liaison 12 peut notamment présenter une structure asymétrique. On entend par « structure asymétrique » que les portions extrémales 18 de la barre de liaison 12 ne sont pas identiques ni en longueur, ni en inclinaison par rapport à la portion centrale 16 de la barre de liaison 12, ce qui confère une forme asymétrique à ladite barre de liaison 12. Un mode de réalisation d'une telle barre de liaison 12 avec une structure asymétrique est notamment illustrée sur la figure 3.

Selon un mode de réalisation préférentiel, la barre de liaison 12 peut comporter au moins un bras additionnel 30 de support en plus du tube métallique courbé qui forme la portion centrale 16 et les deux portions extrémales 18 de la barre de liaison 12. Le au moins un bras additionnel 30 comprend notamment une extrémité solidaire du tube métallique courbé qui forme la portion centrale 16 et les deux portions extrémales 28 de la barre de liaison. Par ailleurs, le au moins un bras additionnel 30 s'étend de sorte à être sensiblement parallèle à l'axe X longitudinal.

Dans le mode de réalisation illustré sur les figures 2 à 5, la barre de liaison 12 comporte plus particulièrement deux bras additionnel 30 de support. Ces deux bras additionnels 30 ont notamment la même longueur et ils sont parallèles entre eux. En outre, les extrémités fixes des bras additionnel 30 se situent au niveau des jonctions entre la portion centrale 16 et les deux portions extrémales 18 de la barre de liaison 12.

Dans ce mode de réalisation, l'extrémité libre du au moins un bras additionnel 30 peut présenter une lame de fixation 32 configurée pour accueillir au moins un élément de fixation destiné à fixer la barre de liaison 12 à son environnement. La lame de fixation 32 comporte notamment au moins une ouverture qui est configurée pour y accueillir ledit élément de fixation. L'élément de fixation peut notamment être une vis destinée à être agencée dans un écrou.

Selon un mode de réalisation particulier, les lames de fixation 32 des deux bras additionnels 30 de support sont fixées sur des renforts de coupelle amortisseurs. En fixant la barre de liaison 12 au tablier par l'intermédiaire des lames de fixation 32 des deux bras additionnels 30 de support, l'ensemble formé par la barre de liaison 12 et le tablier peut contribuer à la stabilité globale du véhicule automobile 10.

Une barre de liaison 12 qui présente une structure et des dimensions telles que décrite ci-dessus présente par ailleurs l'avantage d'être facile à fabriquer. Selon un procédé de fabrication préférentielle pour une telle barre de liaison 12, celle-ci peut notamment être obtenue au cours d'un procédé de cintrage à froid. Un tel procédé de fabrication est fiable et économique.

Grâce à sa géométrie générale et plus particulièrement grâce à la présence d'au moins une patte de fixation 24, la barre de liaison 12 permet non seulement de créer au moins un point d'accroche supplémentaire pour le module 14 de chauffage et/ou de climatisation, surmontant ainsi le problème de la masse du module 14 en porte à faux à l'intérieur du compartiment, mais également de créer une surface d'appui pour d'autres composants du compartiment moteur. Une telle barre de liaison 12 apporte également une rigidité supplémentaire au véhicule automobile 10 dans le cas d'un choc frontal. De manière générale, une telle barre de liaison 12 permet de renforcer la protection des composants à l'intérieur du compartiment moteur du véhicule automobile 10.

La géométrie d'une telle barre de liaison 12, en particulier le nombre de pattes de fixation 24, l'emplacement desdites pattes de fixation 24 et les angles d'inclinaisons desdites pattes de fixation 24 et/ou des portions 16, 18 du au moins un tube de la barre de liaison 12 et/ou du ou des bras additionnels 30 de support peuvent être adaptés à la géométrie du module 14 de chauffage et/ou de climatisation et l'environnement dans lequel sont agencés ledit module 14 et la barre de liaison 12 qui dictent la géométrie de cette barre de liaison 12. Chaque barre de liaison 12 est ainsi adaptable en fonction du véhicule 10 dans lequel elle est destinée à être montée et elle permet par sa polyvalence d'assurer une multitude de fonctions dans un même agencement d'un module 14 de chauffage et/ou de climatisation à l'intérieur d'un compartiment d'un véhicule automobile 10.

Comme illustré sur la figure 1, la portion centrale 16 de la barre de liaison 12 est agencée longitudinalement en avant du module 14 de chauffage et/ou de climatisation.

Par en avant, on entend ici que la portion centrale 16 est placée au voisinage immédiat du module 14, légèrement décalé vers l'avant. Par exemple, la partie centrale 16 est placée pour partie au-dessus du module 14 et pour partie vers l'avant du module 14. Par en avant, on entend également que la partie centrale 16 est placée entièrement au-dessus d'une extrémité avant du module 14, seule l'au moins une patte de fixation étant située vers l'avant du module 14.

La partie centrale 16 de la barre de liaison 12 est située plus haut que le module 14 de chauffage et/ou de climatisation. La hauteur est considérée ici selon la direction Z.

En d'autres termes, le module 14 est suspendu à la barre de liaison 12, celui-ci constituant une sorte de portique pour l'accrochage du module 14.

L'au moins une patte de fixation 24 est fixée à une partie supérieure du module 14 de chauffage et/ou de climatisation de sorte à porter une partie du poids du module, voire l'ensemble du poids du module 14 de chauffage et/ou de climatisation.

Dans l'exemple représenté sur la figure 1, les pattes de fixation 24 sont fixées sont des consoles formées sur une face avant du module 14.

Comme décrit plus haut, les plaques de fixation 20 des extrémités libres des deux portions extrémales 18 de la barre de liaison 12 sont fixées à des parties latérales de la caisse du véhicule automobile 10.

Du fait de la forme en portique de la barre de liaison 12, et du fait que la partie centrale 16 est située plus haut que le module 14, il est avantageux que les portions extrémales 18 soient fixées aux coupelles amortisseurs 21.

Les coupelles amortisseurs 21 sont prévues pour recevoir intérieurement les extrémités supérieures des amortisseurs du véhicule.

Ces coupelles sont situées assez haut, et sont particulièrement épaisses et rigides. Elles forment des points d'appui bien adaptés pour la barre de liaison 12.

Par ailleurs, une partie arrière du module 14 de chauffage et/ou de climatisation est en appui contre le tablier transversal T.

Cette double fixation, vers l'arrière au tablier et en haut vers l'avant suspendu à la barre de liaison, permet conférer une grande stabilité au module 14, en dépit de son poids important. Elle limite le niveau de vibration généré dans le tablier.

Comme visible sur la figure 1, le module 14 de chauffage et/ou de climatisation s'étend longitudinalement à partir du tablier transversal T au-delà des coupelles amortisseurs 21. Il est supporté seulement par la barre de liaison 12 et le tablier T.

Dans l'exemple représenté, le module 14 de chauffage et/ou de climatisation présente une forme générale en U, avec une partie centrale transversale située longitudinalement au-delà des coupelles amortisseurs 21 et supportée seulement par la barre de liaison 12, et deux partie latérales s'étendant vers l'arrière à partir de la partie centrale et fixées au tablier transversal T.

Un aspect avantageux de l'invention est que la barre de liaison a une fonction anti-rapprochement. Elle contribue à empêcher les deux parties latérales de la caisse de se rapprocher l'une de l'autre suivant la direction transversale. En effet, en cas d'accélération brutale du moteur du véhicule, il se produit une réaction au niveau de la caisse du véhicule. Cette réaction tend à solliciter les deux parties latérales de la caisse l'une vers l'autre. La barre de liaison est bien adaptée pour empêcher le rapprochement des deux parties latérales de la caisse, du fait de son orientation, de sa rigidité et du fait qu'elle est fixée sont des zones particulièrement rigides de la caisse.

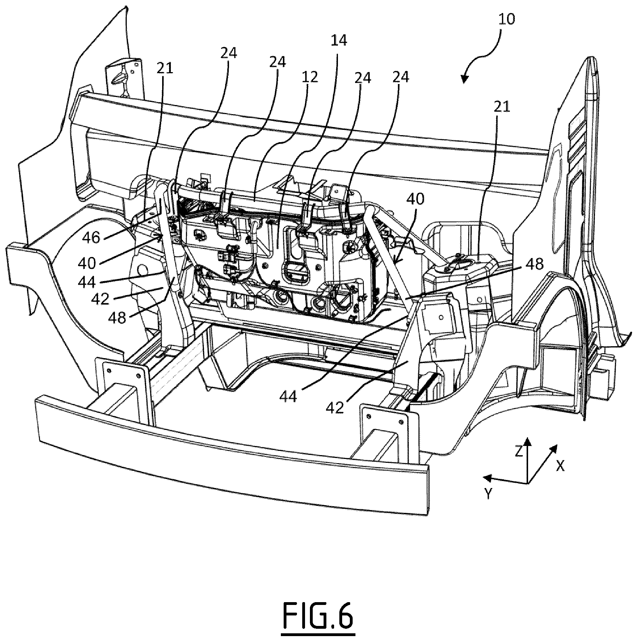

Selon un autre mode de l'invention représenté sur la figure 6, la barre de liaison 12 comporte au moins un autre bras additionnel 40 de support.

L'extrémité libre 48 dudit autre bras additionnel 40 présente une autre lame de fixation 44 configurée pour accueillir au moins un élément de fixation destiné à fixer la barre de liaison 12 à un renfort de coupelle amortisseur 42.

L'extrémité 46 dudit autre bras additionnel 40, opposée à l'extrémité libre 48, est rigidement fixée à la partie centrale 16 de la barre de liaison 12, par exemple par soudage.

Typiquement, la barre de liaison 12 comporte deux autres bras additionnels 40 de support, dont les extrémités libres respectives portent chacune une autre lame de fixation 44, ces deux lames de fixation étant rigidement fixées à deux renforts de coupelle amortisseur 42 situés transversalement de deux côtés opposés du véhicule. Les deux renforts de coupelle amortisseur 42 renforcent les deux coupelles amortisseurs 21 situés transversalement des deux côtés opposés du véhicule.

Chaque renfort de coupelle amortisseur 42 est rigidement fixé par une partie supérieure à la coupelle amortisseur 21 correspondante. Il est rigidement fixé par une partie inférieure à un des longerons du véhicule.

La portion centrale 16 de la barre de liaison est située longitudinalement entre les plaques de fixation 20 et les autres lames de fixation 44, ce qui confère une bonne stabilité à la barre de liaison.

Dans le second mode de réalisation, la barre de liaison 12 ne comporte pas les bras additionnels 30. En variante, la barre de liaison comporte à la fois l'au moins un bras additionnel 30 et l'au moins un autre bras additionnel 40.

## Revendications

1. Barre de liaison (12) pour le maintien d'un module (14) de chauffage et/ou de climatisation agencé à l'intérieur d'un compartiment d'un véhicule automobile (10), notamment un véhicule (10) hybride ou électrique, la barre de liaison (12) étant destinée à être montée transversalement à l'intérieur dudit compartiment de manière à entourer au moins partiellement ledit module (14) de chauffage et/ou de climatisation, la barre de liaison (12) comprenant au moins un tube métallique courbé de sorte à présenter des portions distinctes inclinées les unes par rapport aux autres, dont une portion centrale (16) et deux portions extrémales (18) qui forment des extrémités de la barre de liaison (12), les portions extrémales (18) comportant chacune une plaque de fixation (20) configurée pour accueillir au moins un élément de fixation destiné à fixer la barre de liaison (12) à son environnement, ladite barre de liaison (12) étant **caractérisée en ce qu'**elle comporte au moins une patte de fixation (24) configurée pour être fixée au module (14) de chauffage et/ou de climatisation afin de maintenir ledit module (14).

2. Barre de liaison selon la revendication précédente, **caractérisée en ce que** la au moins une patte de fixation (24) comprend une surface plane (26) et **en ce que** les bords (28) de ladite surface plane (26) de la patte de fixation (24) sont courbés de sorte à conférer à la patte de fixation (24) une section en forme de « U ».

3. Barre de liaison selon l'une des revendications précédentes, **caractérisée en ce que** la au moins une patte de fixation (24) présente une forme en crochet.

4. Barre de liaison selon l'une des revendications précédentes, **caractérisée en ce qu'**elle comporte plusieurs pattes de fixation (24), notamment quatre pattes de fixation (24) agencées sur la portion centrale (16) de la barre de liaison (12).

5. Barre de liaison selon l'une des revendications précédentes, **caractérisée en ce qu'**elle comporte au moins un bras additionnel (30) de support et **en ce que** l'extrémité libre dudit bras additionnel (30) présente une lame de fixation (32) configurée pour accueillir au moins un élément de fixation destiné à fixer la barre de liaison (12) à son environnement.

6. Barre de liaison selon l'une des revendications précédentes, **caractérisée en ce que** ladite barre (12) présente une structure asymétrique.

7. Barre de liaison selon l'une des revendications précédentes, **caractérisée en ce que** le au moins un tube métallique courbé présente une section circulaire ayant un diamètre compris entre 25 mm et 50 mm, et plus particulièrement un diamètre égal à 30 mm et/ou **caractérisée en ce que** l'épaisseur du au moins un tube métallique courbé est comprise entre 2.5 mm et 5 mm, et plus particulièrement égale à 3 mm.

8. Procédé de fabrication d'une barre de liaison (12) selon l'une des revendications précédentes, **caractérisé en ce que** ladite barre de liaison (12) est obtenue au cours d'un procédé de cintrage à froid.

9. Véhicule automobile (10), notamment un véhicule (10) hybride ou électrique, le véhicule (10) comprenant :
- un habitacle ;
- un compartiment moteur situé longitudinalement à l'avant de l'habitacle ;
- un tablier transversal séparant l'habitacle et le compartiment moteur l'un de l'autre ;
- un module (14) de chauffage et/ou de climatisation agencé à l'intérieur du compartiment moteur ;
- une barre de liaison (12) selon l'une des revendications 1 à 7, la portion centrale (16) étant agencée longitudinalement en avant du module de chauffage et/ou de climatisation (14), l'au moins une patte de fixation (24) étant fixée à une partie supérieure du module de chauffage et/ou de climatisation (14) de sorte à porter une partie du poids du module (14), voire l'ensemble du poids du module (14) de chauffage et/ou de climatisation, les plaques de fixation (20) des extrémités libres des deux portions extrémales (18) de la barre de liaison (12) étant fixées à des parties latérales d'une caisse du véhicule automobile (10) ;
une partie arrière du module de chauffage et/ou de climatisation (14) étant en appui contre le tablier transversal.

10. Véhicule automobile selon la revendication 9, dans lequel la partie centrale (16) de la barre de liaison (12) est située plus haut que le module de chauffage et/ou de climatisation (14).

11. Véhicule automobile selon la revendication 9 ou 10, dans lequel les parties latérales de la caisse du véhicule automobile (10) sur lesquelles sont fixées les plaques de fixation (20) des extrémités libres des deux portions extrémales (18) de la barre de liaison (12) sont les coupelles amortisseurs (21).

12. Véhicule automobile selon l'une quelconque des revendications 9 à 11, dans lequel la barre de liaison (12) comporte au moins un autre bras additionnel (40) de support, l'extrémité libre (48) dudit autre bras additionnel (40) présentant une autre lame de fixation (44) configurée pour accueillir au moins un élément de fixation destiné à fixer la barre de liaison (12) à un renfort de coupelle amortisseur (42).

13. Véhicule automobile selon l'une quelconque des revendications 9 à 12, dans lequel le module (14) de chauffage et/ou de climatisation s'étend longitudinalement à partir du tablier transversal au-delà des coupelles amortisseurs (21), et est supporté seulement par la barre de liaison (12) et le tablier.

14. Véhicule automobile selon la revendication 13, dans lequel le module (14) de chauffage et/ou de climatisation présente une forme générale en U, avec une partie centrale transversale située longitudinalement au-delà des coupelles amortisseurs (21) et supportée seulement par la barre de liaison (12), et deux partie latérales s'étendant vers l'arrière à partir de la partie centrale et fixées au tablier transversal.
